# EUROPEAN PATENT SPECIFICATION

(11) **EP 2 975 551 B1**
(45) Date of publication and mention of the grant of the patent: **15.02.2017**
(21) Application number: 15173964.6
(22) Date of filing: 26.06.2015
(51) Int. Cl.: G06K 7/10

(54) **READING APPARATUS AND METHOD FOR READING INFORMATION FROM RFID TAG BY THE SAME**
LESEVORRICHTUNG UND VERFAHREN ZUM LESEN VON INFORMATIONEN VON RFID-ETIKETTEN DAMIT
PROCÉDÉ ET APPAREIL PERMETTANT DE LIRE LES INFORMATIONS D'ÉTIQUETTE RFID PAR CELUI-CI

(30) Priority: 27.06.2014 JP 2014133031
(43) Date of publication of application: 20.01.2016
(73) Proprietor: Toshiba TEC Kabushiki Kaisha, Tokyo 141-0032 (JP)
(72) Inventor: HARAGUCHI, Ryuta, Shinagawa-ku, Tokyo 141-0032 (JP)
(74) Representative: Takeuchi, Maya

(56) References cited:
- US-A1- 2006 208 072
- US-B1- 6 983 033

## Description

### FIELD

Embodiments described herein relate to a reading apparatus and a method for reading information from an RFID tag attached to a commodity.

### BACKGROUND

A commodity sales processing apparatus is known which reads commodity information from an RFID tag attached to a commodity and implements a sales registration and account settlement processing based on the commodity information. An apparatus is proposed in which commodities or a shopping basket in which commodities are put are/is placed on a checkout counter inside of which a planar antenna is embedded so that commodity information of the commodities can be read collectively. In recent years, more and more shops are employing a self-checkout apparatus (e.g. self-service Point Of Sales apparatus (POS) and self-settlement apparatus) with which a customer can independently implement a sales registration and account settlement processing. When using such a self-checkout apparatus, a customer reads a code symbol attached to a commodity with a scanner. Further, US20060208072 discloses a shopping cart with RFID capability.

However, because of the placement position of a commodity, there is a possibility that the RFID tag on the commodity cannot be read normally. For example, it may be difficult to read the RFID tags which are overlapped or the RFID tag placed on the null point of an RFID antenna. In the use of the self-checkout apparatus with the foregoing structure, in a case where an RFID tag is placed like this, then the customer needs to change the placement position of a corresponding commodity, which adversely affects the customer satisfaction if the customer is not familiar with this operation. Further, if the commodities increase the sales of which needs to be registered, then the burden of the customer increases as well, resulting in a low processing efficiency. For this reason, an efficient commodity reading technology is desired.

### BRIEF DESCRIPTION OF DRAWINGS

Fig. 1 is an external perspective view showing the constitution of a self-checkout apparatus according to a first embodiment;
Fig. 2 is an external perspective view showing the general structure of a reading apparatus according to a first embodiment;
Fig. 3 is a schematic sectional view of a reading apparatus according to a first embodiment;
Fig. 4 is a diagram exemplifying another configuration of an RFID antenna;
Fig. 5 is a block diagram illustrating hardware structures of a self-checkout apparatus and a reading apparatus;
Fig. 6 is a block diagram illustrating the functional structures of a self-checkout apparatus and a reading apparatus;
Fig. 7 is a flowchart exemplifying the operations of a self-checkout apparatus and a reading apparatus;
Fig. 8 is a schematic sectional view of a reading apparatus according to a modification of the first embodiment;
Fig. 9 is a schematic sectional view of a reading apparatus according to another modification of the first embodiment;
Fig. 10 is a top view illustrating the general structure of the placing table shown in Fig. 9;
Fig. 11 is a schematic sectional view of a reading apparatus according to a second embodiment; and
Fig. 12 is a schematic sectional view of a reading apparatus according to a modification of the second embodiment.

### DETAILED DESCRIPTION

In accordance with one embodiment, a reading apparatus for reading information from an RFID tag attached to a commodity, includes a box provided with an opening acting as a commodity inlet/outlet and an accommodation chamber for accommodating commodities, an opening/closing cover configured to open/close the opening of the box, an antenna arranged in the accommodation chamber, a reading unit configured to carry out a reading processing in which information relating to a commodity is read from each RFID tag attached to each commodity accommodated in the accommodation chamber through the antenna, a change unit configured to change an electric wave environment relating to the communication of the RFID tag with the antenna within a period in which the reading processing is executed, and an output unit configured to output the information read by the reading unit.

The change unit may change the electric wave environment by moving the commodity directly or indirectly.

The reading apparatus may further includes a placing table for holding the commodity arranged in the accommodation chamber.

The change unit may change the electric wave environment by moving the placing table.

The reading apparatus may further including a reflector component composed of an electric wave reflecting element arranged in the accommodation chamber.

The change unit may change the electric wave environment by moving the reflector component.

The reading apparatus may further comprise an acquisition unit configured to acquire the opened/closed state information indicating the opened/closed state of the opening/closing cover.

The reading unit may carry out the reading processing within a period in which the opening/closing cover is closed based on the opened/closed state information.

The present invention also relates to a method for reading information from an RFID tag attached to a commodity accommodated in an accommodation chamber through an antenna. The method includes executing a reading processing in which information relating to a commodity is read from each RFID tag attached to each commodity in the accommodation chamber, changing an electric wave environment relating to the communication of the RFID tag with the antenna within a period in which the reading processing is executed and outputting the information read from the RFID tag.

The electric wave environment may be changed by moving the commodity directly or indirectly at changing step.

The electric wave environment may be changed by moving a placing table for holding the commodity arranged in the accommodation chamber.

Alternatively, the electric wave environment may be changed by moving a reflector component composed of an electric wave reflecting element arranged in the accommodation chamber.

The method for reading information may further comprise acquiring the opened/closed state information indicating the opened/closed state of the opening/closing cover, and carrying out the reading processing within a period in which the opening/closing cover is closed based on the opened/closed state information.

### (First Embodiment)

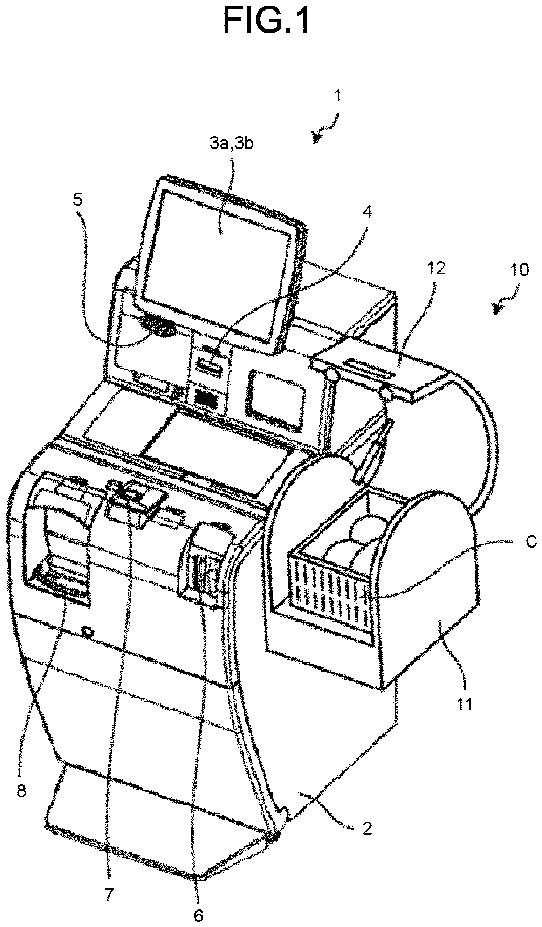

Fig. 1 is an external perspective view showing the constitution of a self-checkout apparatus 1 according to a first embodiment. The self-checkout apparatus 1 is installed and used in, for example, a supermarket or a clothing store. The main body 2 of the self-checkout apparatus 1 comprises a display 3b on the surface of which a touch panel 3a is arranged. The display 3b is, for example, a liquid crystal display.

Further, a card inserting slot 4 into which the point or loyalty card or credit card of a customer is inserted for an account settlement and a receipt issuing opening 5 from which a receipt is issued are arranged on the main body 2 of the self-checkout apparatus 1. Further, a banknote slot 6 for inputting/dispensing banknotes at an account settlement, a coin inlet 7 for inputting coins at an account settlement and a coin outlet 8 for outputting coins as change at an account settlement are arranged on the main body 2.

A reading apparatus (reading unit) 10 for reading a radio tag,i.e., an RFID (Radio Frequency Identifier) tag in the embodiment, attached to a commodity is arranged on the right side of the main body 2. The reading apparatus 10 which is described in detail later shields the electric wave coming from the outside and functions as an accommodation chamber.

The reading apparatus 10 outputs (sends) various information read from an RFID tag attached to a commodity to the self-checkout apparatus 1 via a cable (not shown). In this way, the reading apparatus 10 is integrated with the self-checkout apparatus 1.

Further, each commodity is attached with an RFID tag (not shown) in which a commodity code for identifying the commodity is recorded. Further, the RFID tag includes a memory area in which a registration completion flag (described later) is written. The registration completion flag is written into the memory area so as to prevent a commodity that is not settled from being taken out of the store, mistakenly. Presence of a registration completion flag is detected by the gate at the entrance/exit of the store, and a commodity with a registration completion flag which is not set is alarmed by a notification unit such as a buzzer.

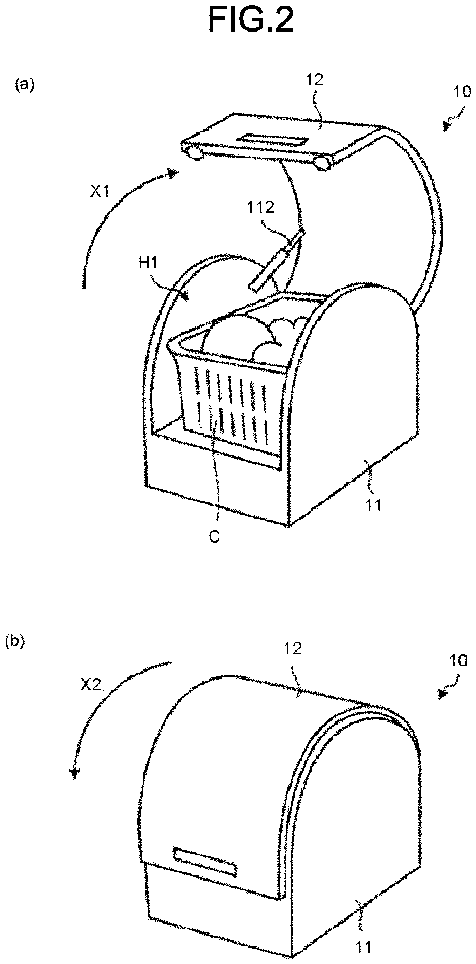

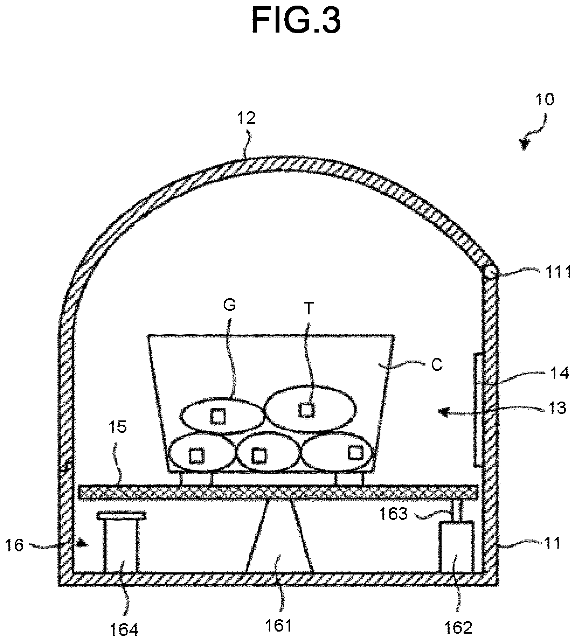

The reading apparatus 10 is described below. Fig. 2 is an external perspective view showing the general structure of the reading apparatus 10. Fig. 2(a) shows a state in which an opening/closing cover 12 of the reading apparatus 10 is opened. Fig. 2(b) shows a state in which the opening/closing cover 12 of the reading apparatus 10 is closed. Further, Fig. 3 is a schematic sectional view of the reading apparatus 10 the opening/closing cover 12 of which is closed.

The reading apparatus 10 includes a box 11 which constitutes the main housing of the reading apparatus 10 and an opening/closing cover 12 for opening or closing an inlet/outlet,i.e., an opening H1, arranged on the box 11 for a shopping basket C. The box 11 is formed in the shape of a box such that the proportion of the horizontal width is smaller than that of the internal depth. Further, a reading chamber (accommodation chamber) 13 capable of accommodating the shopping basket C is arranged inside the box 11.

The external walls (outer sides) of the box 11 and the opening/closing cover 12 are composed of electric wave reflector components (made of electric wave reflecting materials) or electric wave absorber components (made of electric wave absorbing materials). Further, the internal walls (inner sides) of the box 11 and the opening/closing cover 12 are made of electric wave reflecting materials. Well-known electric wave reflecting materials or electric wave absorbing materials such as metals, die materials and ferrites can be used as such components.

The opening/closing cover 12 is opened (Fig. 2(a)) by being lifted towards the direction indicated by an arrow X1 on a hinge mechanism 111, acting as a rotational center, arranged on the back side of the box 11. Further, the opening/closing cover 12 is closed (Fig. 2(b)) by being pulled towards the direction indicated by an arrow X2 on the hinge mechanism 111. The customer can open the opening/closing cover 12 to put/take a shopping basket C in which commodities are put into/out of the reading chamber 13 of the box 111 through the opening H1 of the box 11. Further, to slow down the opening/closing speed of the opening/closing cover 12 or keep the opening/closing cover 12 opened, a damper 112 may be arranged between the box 11 and the opening/closing cover 12.

An RFID antenna 14 is arranged in the reading chamber 13 to read data from or write data into an RFID tag. The RFID antenna 14 refers to an antenna device, for sending or receiving data, having a cubic box which accommodates a patch antenna.

In the present embodiment, as shown in Fig. 3, the RFID antenna 14 is arranged on the back side of the box 11 and fixed such that the reading surface thereof is oriented to the inside of the reading chamber 13. The reading surface refers to the electric wave radiation surface of the patch antenna. The RFID antenna 14 communicates with the RFID tag T in the reading chamber 13, that is, the RFID tag T of each commodity G in the shopping basket C, by radiating an electric wave having a UHF band. Further, the shopping basket C is held on a placing table 15 in the reading chamber 13. The placing table 15 made of a tabular electric wave reflecting material is supported in a swingable manner by a support mechanism 16.

As shown in Fig. 3, the support mechanism 16 including support unit 161 and a power unit 162 is arranged between the bottom of the box 11 and the placing table 15. The support unit 161 the support shaft of which is mounted in substantially the center of the bottom side of the placing table 15 is capable of supporting the placing table 15 in a seesaw movement manner. The power unit 162 is a power source such as an air cylinder or oil cylinder. The shaft 163 of the piston section of the power unit 162 is fixed on one of the ends of the placing table 15 through knuckle joint. The placing table 15 makes a seesaw movement (swinging) under the operation of the power unit 162, thereby swinging the shopping basket C (commodity G) held on the placing table 15. Further, in the example shown in Fig. 3, to prevent the placing table 15 from tilting overly, a stopper 164 is arranged on the other end of the placing table 15.

However, for the sake of the placement position of a commodity G, sometimes, it is difficult to read the RFID tag T attached to the commodity G normally. For example, it may be difficult to read the RFID tags T which are overlapped or placed on the null point of the RFID 14.

Thus, in the present embodiment, the position relationship between an RFID tag T and the RFID antenna 14, in other words, the electric wave environment relating to the communication of the RFID tag T with the RFID antenna 14, is changed by moving the shopping basket C (commodity G). Then, the RFID antenna 14 can read the RFID tags T attached to the commodities G in the shopping basket C more accurately.

With the reading apparatus 10 having this structure, the shopping basket C is accommodated in the reading chamber 13 so that all the commodities G (RFID tags T) in the shopping basket C can be read together. Further, as commodities are read while the electric wave environment relating to the communication of the RFID tag T with the RFID antenna 14 is changed, the accidentally failure of reading an RFID tag T is prevented. Thus, commodities G can be read efficiently.

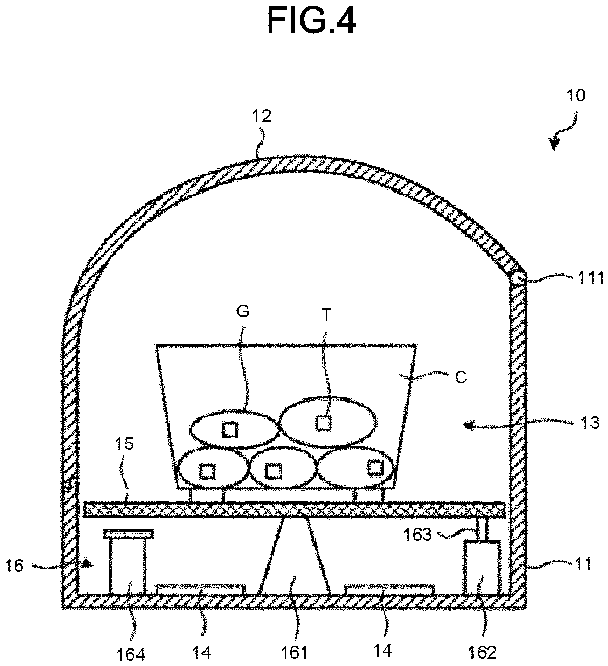

Further, in the structure shown in Fig. 3, the RFID antenna 14 is arranged on the back side of the box 11, however, no limitations are given to the configuration position or the number of the RFID antennas 14. For example, as shown in Fig. 4, the RFID antennas 14 are arranged on two sides (or one side) of the support unit 161 and positioned on the lower part of the placing table 15, in other words, positioned on the bottom of the box 11. In a case in which this structure is adopted, the placing table 15 is preferably made of a highly insulating electric wave transmitting material such as wood or glass. Further, the RFID antenna 14 may also be arranged on a lateral side or the upper side of the box 11 with respect to the shopping basket C. In any case, it is preferred that the reading surface of the RFID antenna 14 faces the shopping basket C.

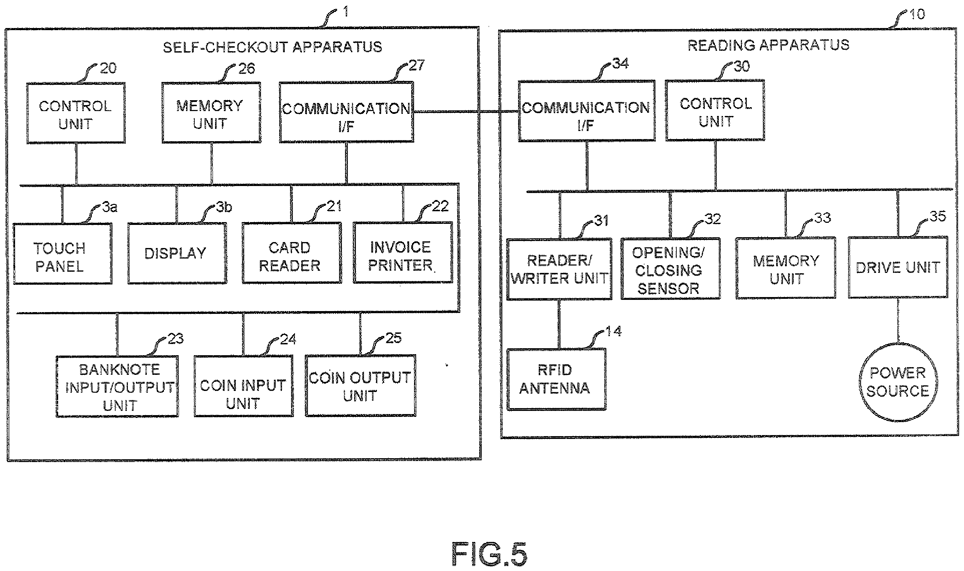

The hardware structures of the self-checkout apparatus 1 and the reading apparatus 10 are described below. Fig. 5 is a block diagram illustrating the hardware structures of the self-checkout apparatus 1 and the reading apparatus 10.

The self-checkout apparatus 1 comprises a control unit 20 having the structure of a computer composed of a Central Processing Unit (CPU), a Read Only Memory (ROM) and a Random Access Memory (RAM). The ROM stores various programs and data executed by the CPU. The RAM temporarily stores various programs and data generated with the execution of various programs by the CPU.

The control unit 20 is connected with a touch panel 3a, a display 3b, a card reader 21, receipt printer 22, a banknote input/output unit 23, a coin input unit 24 and a coin output unit 25 via various input/output circuits (not shown).

The card reader 21 reads information from a loyalty card (so-called point card) or credit card inserted by a customer from the card slot 4. The receipt printer 22 prints a receipt after an account settlement is completed to issue the receipt from the receipt issuing opening 5. The banknote input/output unit 23 processes banknotes input/output through the banknote slot 6. Further, the coin input unit 24 processes coins input from the coin inlet 7, and the coil output unit 25 processes coins output to the coin outlet 8.

Further, the control unit 20 is connected with a memory unit 26, a communication I/F 27 and so on via various input/output circuits (not shown).

The memory unit 26 is a memory device equipped with a non-volatile storage medium such as a Hard Disk Drive (HDD) or a Solid State Drive (SSD). The memory unit 26 stores various programs and data involved in the operation of the self-checkout apparatus 1. The data stored in the memory unit 26 may be, for example, a commodity master file in which commodity information of each commodity is registered in association with a commodity code for identifying the commodity. The commodity information includes, for example, the commodity name and the price of a corresponding commodity. The communication I/F 27 is an interface for the data transmission with the reading apparatus 10.

On the other hand, the reading apparatus 10 comprises a control unit 30 having the structure of a computer composed of a CPU, a ROM, a RAM and the like. The ROM stores various programs and data executed by the CPU. The RAM temporarily stores various programs and data generated with the execution of various programs by the CPU.

The control unit 30 is connected with a reader/writer unit 31, an opening/closing sensor 32, a memory unit 33, a communication I/F 34, a drive unit 35 and so on via various input/output circuits (not shown).

Under the instruction of the control unit 30, the reader/writer unit 31 communicates with an RFID tag T via the RFID antenna 14 to read/write data. The opening/closing sensor 32 is used for detecting the opened state/closed state of the opening/closing cover 12. The opening/closing sensor 32 outputs opened/closed state information indicating the opened state/closed state of the opening/closing cover 12 to the control unit 30. The opening/closing sensor 32 can be implemented as a micro switch or a magnetic sensor arranged at the contact-part between the box 11 and the opening/closing cover 12 or on the hinge mechanism 111 of the opening/closing cover 12. Further, when the opening/closing cover 12 is closed, the reading chamber 13 becomes a dark place, and in this case, the opening/closing sensor 32 can be implemented as an optical sensor arranged in the reading chamber 13.

The memory unit 33 is a memory device equipped with a non-volatile storage medium such as an HDD or SSD. The memory unit 33 stores various programs and data relating to the operation of the reading apparatus 10. The communication I/F 34 is used for the data transmission with the self-checkout apparatus 1. The drive unit 35 is a driver circuit which drives a power source (the power unit 162) under the control of the control unit 30 (drive control unit 303 described later).

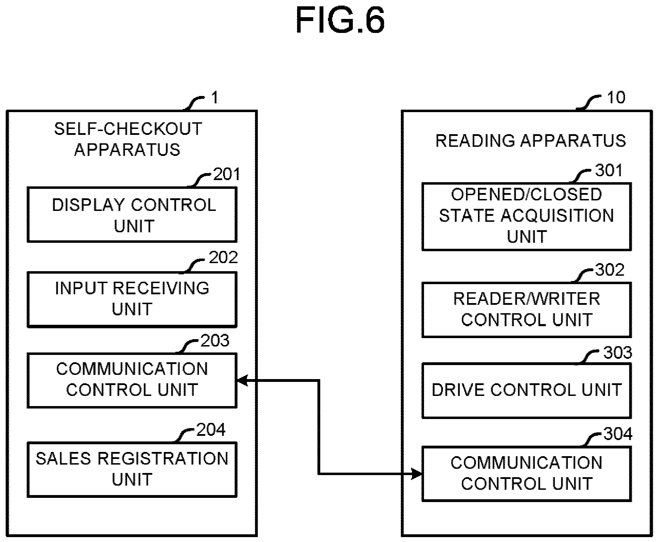

The functional structures of the self-checkout apparatus 1 and the reading apparatus 10 are described below. Fig. 6 is a block diagram illustrating the functional structures of the self-checkout apparatus 1 and the reading apparatus 10.

The control unit 20 (CPU) of the self-checkout apparatus 1 cooperates with the programs stored in the memory unit 26 to implement a display control unit 201, an input receiving unit 202, a communication control unit 203 and a sales registration unit 204 as functional units.

The display control unit 201 controls the display 3b to display various screens on the display 3b. For example, the display control unit 201 displays a screen containing an operator for instructing the start of the reading of a commodity code (RFID tag T) (hereinafter referred to as a read-start key) and an operator for instructing the end of a reading operation (hereinafter referred to as a read-end key).Further, the display control unit 201 reads, based on a commodity code sent from the reading apparatus 10, commodity information corresponding to the commodity code from the commodity master file and displays the name and the price of the commodity, a receiving or depositing amount and a change amount.

The input receiving unit 202 receives an operation input via the touch panel 3a. For example, when an operator is operated (touched) on an operation screen displayed on the display 3b, the input receiving unit 202 outputs instruction information corresponding to the operator to the control unit 20.

The communication control unit 203 controls the communication I/F 27 to send/receive various information to/from the reading apparatus 10 via the communication I/F 27. For example, if the read-start key is operated, then the communication control unit 203 sends instruction information indicating the start of a reading operation to the reading apparatus 10. Further, the communication control unit 203 receives a commodity code sent from the reading apparatus 10. Further, if the read-end key is operated, then the communication control unit 203 sends instruction information indicating the end of a reading operation to the reading apparatus 10. Further, if the sales registration unit 204 completes a sales registration processing, then the communication control unit 203 sends instruction information indicating the completion of a registration operation to the reading apparatus 10.

If the commodities corresponding to the commodity codes sent from the reading apparatus 10 are all account-settled for payment, then the sales registration unit 204 sales-registers the commodity codes as the commodities purchased by the customer. Specifically, the sales registration unit 204 registers the commodity code of each commodity in a registration database along with a receiving amount, a change amount and a transaction date and time. Further, the registration database may be provided in the memory unit 26 of the self-checkout apparatus 1 or provided in an external device capable of communicating with the self-checkout apparatus 1.

On the other hand, the control unit 30 (CPU) of the reading apparatus 10 cooperates with the programs stored in the memory unit 33 to implement an opening/closing state acquisition unit 301, a reader/writer control unit 302, a drive control unit 303 and a communication control unit 304 as functional units.

The opening/closing state acquisition unit 301 cooperates with the opening/closing sensor 32 to acquire opening/closing state information indicating the opening/closing state of the opening/closing cover 12.

The reader/writer control unit 302 controls the reader/writer unit 31 to read/write data from/into an RFID tag T attached to a commodity through the RFID antenna 14.

Specifically, in a case in which the start of the reading operation is instructed by the self-checkout apparatus 1 and the opening/closing state information acquired by the opening/closing state acquisition unit 301 indicates the closed state of the opening/closing cover 12, the reader/writer control unit 302 starts the reading of the RFID tags T. Further, the data (commodity code, for example) read from the RFID tag T is sent from the reader/writer control unit 302 to the self-checkout apparatus 1.

Further, if the end of the reading operation is instructed by the self-checkout apparatus 1, then the reader/writer control unit 302 ends the reading operation by the reader/writer unit 31. Sequentially, if the completion of the registration operation is instructed by the self-checkout apparatus 1, then the reader/writer control unit 302 controls the reader/writer unit 31 to start the writing of a registration completion flag. Here, the registration completion flag is information which represents the end of a sales registration processing and is written into a specific memory area of the RFID tag T.

Further, if the opening/closing cover 12 is opened during a period from the start of the reading the RFID tag to the start of writing the registration completion flag in the RFID tag, the reader/writer control unit 302 terminates the reading and executes a reset processing to reset the commodity codes which are read till now. The commodity codes sent to the self-checkout apparatus 1 are also reset in response to the reset operation by the reader/writer control unit 302. Next, the reader/writer control unit 302 reads RFID tags T again if it is confirmed that the opening/closing cover 12 is closed again.

In this way, even in a case in which a commodity the RFID tag T of which is not read is added in the shopping basket C (reading chamber 13) before the settlement processing is completed, the RFID tag of the added commodity can be read surely. In addition, an occurrence of the opened state of the opening/closing cover 12 is notified to the self-checkout apparatus 1 and then the notified occurrence may be displayed on the display 3b of the self-checkout apparatus 1.

The drive control unit 303 corresponds to the change unit and controls the drive unit 35 to operate the power source (power unit 162). Specifically, the drive control unit 303 drives the drive unit 35 at the time the reader/writer control unit 302 reads RFID tags, thereby swinging the placing table 15. In this way, the shopping basket C (commodity G) held on the placing table 15 is swung to change the electric wave environment relating to the communication between the RFID tags T and the RFID antenna 14. Further, the drive unit 35 may be driven continuously or intermittently while RFID tags T are read.

The communication control unit 304 controls the communication I/F 34 to send/receive various information to/from the self-checkout apparatus 1 via the communication I/F 34. For example, the communication control unit 304 receives instruction information, sent from the self-checkout apparatus 1, which indicates the start of a reading operation. Further, the communication control unit 304 sends a commodity code read by the reader/writer control unit 302 from an RFID tag T to the self-checkout apparatus 1. Further, the communication control unit 304 receives instruction information, sent from the self-checkout apparatus 1, which indicates the end of the reading operation. Further, the communication control unit 304 receives instruction information, sent from the self-checkout apparatus 1, which indicates the completion of a registration operation.

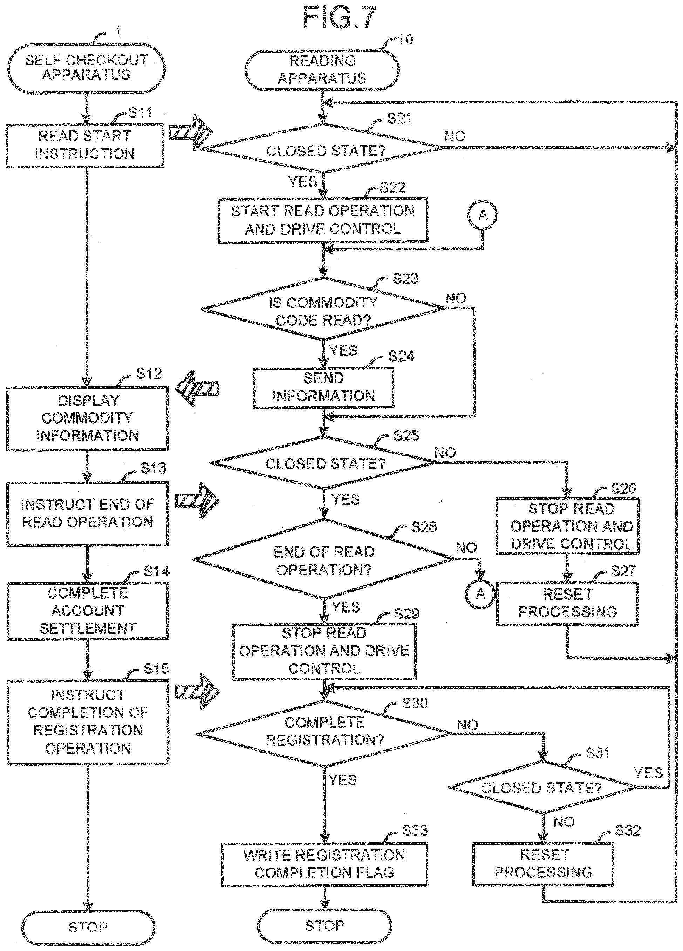

Next, the operations of the self-checkout apparatus 1 and the reading apparatus 10 are described. Fig. 7 is a flowchart illustrating the operations of the self-checkout apparatus 1 and the reading apparatus 10.

A customer who operates the self-checkout apparatus 1 opens the opening/closing cover 12 of the reading apparatus 10 to put the shopping basket C in which commodities G are placed into the reading chamber 13. Next, the customer operates the read-start key on the display 3b of the self-checkout apparatus 1 to start a reading operation.

In the self-checkout apparatus 1, if the operation on the read-start key is received by the input receiving unit 202, then the communication control unit 203 sends instruction information indicating the start of a reading operation to the reading apparatus 10 (Act S 11).

In the reading apparatus 10, if the communication control unit 304 receives instruction information indicating the start of a reading operation, then the reader/writer control unit 302 determines whether or not the opening/closing cover 12 is closed based on the opening/closing state information acquired by the opening/closing state acquisition unit 301 (Act S21). If the reader/writer control unit 302 determines that the opening/closing cover 12 is opened (Act S21: No), then the reader/writer control unit 302 waits for until the opening/closing cover 12 is closed. Further, when the reader/writer control unit 302 is in a standby state, a screen may be displayed through the cooperation of the reader/writer control unit 302 with the display control unit 201 of the self-checkout apparatus 1 to prompt the operator to close the opening/closing cover 12.

If the reader/writer control unit 302 determines that the opening/closing cover 12 is closed in Act S21 (Act S21: Yes), the reader/writer control unit 302 cooperates with the drive control unit 303 to start the reading of RFID tags T (Act S22). Specifically, the reader/writer control unit 302 controls the reader/writer unit 31 to start the reading of RFID tags T and notifies the drive control unit 303 of the start of the reading operation. The drive control unit 303 starts the drive of the drive unit 35 in response to the notification. In other words, the drive control unit 303 starts to swing the placing table 15.

Sequentially, the reader/writer unit 31 determines whether or not commodity codes are read from RFID tags T (Act S23). If commodity codes are read (Act S23: Yes), then the communication control unit 304 successively sends the commodity codes to the self-checkout apparatus 1 (Act S24) and then executes Act S25.

Next, in Act S25, the reader/writer control unit 302 determines whether or not the opening/closing cover 12 is closed based on the opening/closing state information acquired by the opening/closing state acquisition unit 301 (Act S25).If the reader/writer control unit 302 determines that the opening/closing cover 12 is closed (Act S25: Yes), the reader/writer control unit 302 determines whether or not a read end instruction is given from the self-checkout apparatus 1 (Act S28). If no read end instruction is given (Act S28: No), Act S23 is executed.

Further, if no commodity code can be read in Act S23 (Act S23: No), Act S25 is executed. Further, if the reader/writer control unit 302 determines that the opening/closing cover 12 is opened in Act S25 (Act S25: No), the reader/writer control unit 302 stops reading of RFID tags (Act S26). Specifically, the reader/writer control unit 302 controls the reader/writer unit 31 to stop the communication with RFID tags T and notifies the drive control unit 303 of interrupt of a reading cycle. The drive control unit 303 stops the drive of the drive unit 35in response to the notification. In other words, the drive control unit 303 stops the swinging of the placing table 15.

Subsequent to Act S26, the reader/writer control unit 302 executes a reset processing in which commodity codes read until now are reset (Act S27) and returns to execute Act S21 again.

Further, if the reading of the RFID tags is started in a state in which the reading chamber 13 is empty, no RFID tag T is read and thus the following loop is continued: Act S23: No → Act S25: Yes → Act S28: No. To avoid this situation, the reading of RFID tags T and the drive of the drive unit 35 may be forcibly stopped in a case in which a specified time (e.g. 5 seconds) elapses in keeping the state in which no RFID tags T are read. Alternatively, the reading of RFID tags T and the drive of the drive unit 35 may be forcibly stopped in a case in which the foregoing loop is continued at a given number of times. In this case, it is preferred that the reader/writer control unit 302 cooperates with the display control unit 201 of the self-checkout apparatus 1 to display a message 'no RFID tags read'.

In the self-checkout apparatus 1, if a commodity code is received by the communication control unit 203 from the reading apparatus 10, then the display control unit 201 reads commodity information corresponding to the commodity code from the commodity master file and displays the read commodity information on the display 3b (Act S12).

If it is confirmed that all the commodities in the shopping basket C are displayed with reference to commodity information on the display 3b, the customer operates the read-end key displayed on the display 3b. Sequentially, if the operation on the read-end key is received by the input receiving unit 202, then the communication control unit 203 sends instruction information indicating the end of the reading operation to the reading apparatus 10 (Act S13).

In the reading apparatus 10, if the communication control unit 304 receives the instruction information indicating the end of the reading operation, then the reader/writer control unit 302 determines that the end of the reading operation is instructed (Act S28: Yes). Next, the reader/writer control unit 302 stops the reading of RFID tags T (Act S29). Specifically, the reader/writer control unit 302 controls the reader/writer unit 31 to stop communicating with RFID tags T and notifies the drive control unit 303 of the interrupt of the reading cycle. The drive control unit 303 stops the drive of the drive unit 35 in response to the notification. In other words, the drive control unit 303 stops swinging of the placing table 15.

Then, the reader/writer control unit 302 determines whether or not the completion of a registration operation is instructed by the self-checkout apparatus 1 (Act S30). If the completion of a registration operation is not instructed (Act S30: No), the reader/writer control unit 302 determines whether or not the opening/closing cover 12 is closed based on the opening/closing state information acquired by the opening/closing state acquisition unit 301 (Act S31).

If the reader/writer control unit 302 determines that the opening/closing cover 12 is closed (Act S31: Yes), Act S30 is executed. Further, if the reader/writer control unit 302 determines that the opening/closing cover 12 is opened (Act S31: No), the reader/writer control unit 302 carries out the reset processing identical to that in Act S27 (Act S32) and returns to execute S21 again.

In the self-checkout apparatus 1, if a settlement processing is carried out for each commodity G displayed as a candidate commodity (S14), the sales registration unit 204 registers the sales of the commodities G. Then, the communication control unit 203 sends instruction information indicating the completion of a registration operation to the reading apparatus 10 (Act S15) and ends the processing.

In the reading apparatus 10, if the communication control unit 304 receives the instruction information indicating the end of a registration operation, then the reader/writer control unit 302 determines that it is instructed to complete a registration operation (Act S30: Yes). Then, the reader/writer control unit 302 controls the reader/writer unit 31 to write a registration completion flag for the RFID tag T of each commodity (Act S33) and ends the current processing.

In Act S33, specifically, the reader/writer control unit 302 controls the reader/writer unit 31 to start to write data into the RFID tag T and notify the drive control unit 303 of the start of the writing operation. The drive control unit 303 starts the drive of the drive unit 35 in response to the notification. Next, if a registration completion flag is written into each RFID tag T, then the reader/writer control unit 302 controls the reader/writer unit 31 to stop writing data into the RFID tag T and notifies the drive control unit 303 of the end of a write loop. The drive control unit 303 stops the drive of the drive unit 35 in response to the notification.

Further, the reader/writer control unit 302 cooperates with the display control unit 201 of the self-checkout apparatus 1 and the message 'keep the opening/closing cover 12 closed' may be displayed on a screen during the period of writing the registration completion flags. Further, if all registration completion flags are written, the reader/writer control unit 302 cooperates with the display control unit 201 of the self-checkout apparatus 1 and a screen on which a message 'open the opening/closing cover 12' is displayed may be displayed to prompt the opening operation of the cover 12.

In the foregoing embodiment, the electric wave environment relating to the communication of an RFID tag with the RFID antenna 14 is changed by moving the placing table 15 during the period of reading RFID tags T, thereby preventing the failure of reading of an RFID tag T. Therefore, the efficient reading of commodities G can be realized.

Further, although the placing table 15 is swung like a seesaw movement in the foregoing embodiment, the placing table 15 can be moved in other ways. As modifications of the first embodiment, other exemplary structures for moving the placing table 15 are described below.

### [First Modification]

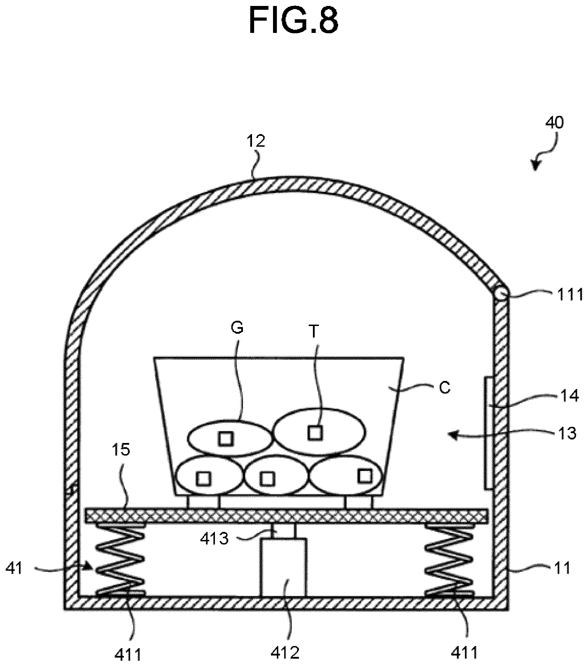

Fig. 8 is a schematic sectional view of a reading apparatus 40 according to a first modification of the present embodiment. Fig. 8 shows a reading apparatus 40 in which the opening/closing cover 12 is closed. The structure elements shown in Fig. 8 which are similar to those in the foregoing embodiment are denoted by the same reference numerals and not described repeatedly.

Like the foregoing reading apparatus 10, the reading apparatus 40 comprises a box 11 and an opening/closing cover 12. A reading chamber 13 capable of accommodating a shopping basket C is arranged inside the box 11. An RFID antenna 14 is arranged in the reading chamber 13. The RFID antenna 14 is arranged, for example, at the backside of the box 11 and the reading surface thereof is fixed facing the inside of the reading chamber 13. Further, the shopping basket C is held on a placing table 15 in the reading chamber 13. The placing table 15 made of a tabular electric wave reflecting material is supported by a support mechanism 41 in a swingable manner.

As shown in Fig. 8, the support mechanism 41 is arranged in the space between the bottom of the box 11 and the placing table 15. The support mechanism 41 is provided with support units 411 and a power unit 412. The support units 411 are arranged at the four bottom corners of the placing table 15 to support the placing table 15 in a swingable manner, using the elastic force of, for example, a spring. The power unit 412 is a power source such as an air cylinder or oil cylinder. The shaft 413 of the piston section of the power unit 412 is fixed in substantially the center of the placing table 15.

In the structure of the present modification, the placing table 15 is vibrated (swung) under the action of the power unit 412, thereby swinging the shopping basket C (commodity G) held on the placing table 15. Further, the hardware structure, the functional structure and the processing sequence relating to the reading (writing) of an RFID tag T in the present modification are identical to those described in the foregoing embodiment and are therefore not described here repeatedly.

With the reading apparatus 40 having the foregoing structure, the shopping basket C is accommodated in the reading chamber 13 so that all the commodities G (RFID tags T) in the shopping basket C can be read together. Further, as the electric wave environment relating to the communication of the RFID tag T with the RFID antenna 14 can be changed in the modification, commodities G can be read efficiently.

### [Second Modification]

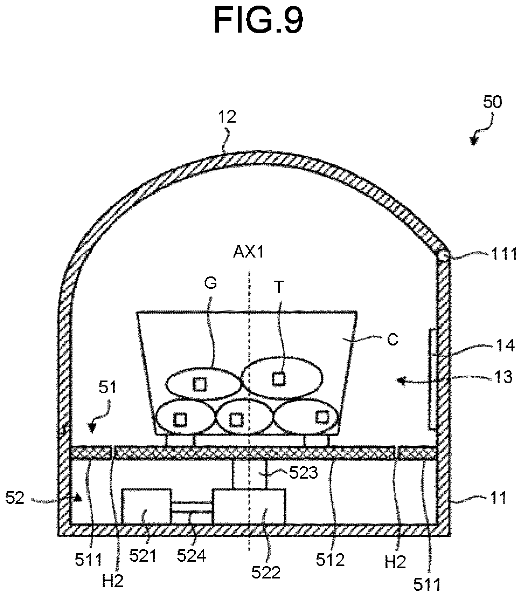

Fig. 9 is a schematic sectional view of a reading apparatus 50 according to a second modification of the first embodiment. Fig. 9 shows a reading apparatus 50 in which the opening/closing cover 12 is closed. The structure elements shown in Fig. 9 which are similar to those in the foregoing embodiment are denoted by the same reference numerals and not described repeatedly.

Like the foregoing reading apparatus 10, the reading apparatus 50 comprises a box 11 and an opening/closing cover 12. A reading chamber 13 capable of accommodating a shopping basket C is arranged inside the box 11. An RFID antenna 14 is arranged in the reading chamber 13. The RFID antenna 14 is arranged, for example, at the backside of the box 11 and the reading surface thereof is fixed facing the inside of the reading chamber 13. The shopping basket C is held on a placing table 15 in the reading chamber 13.

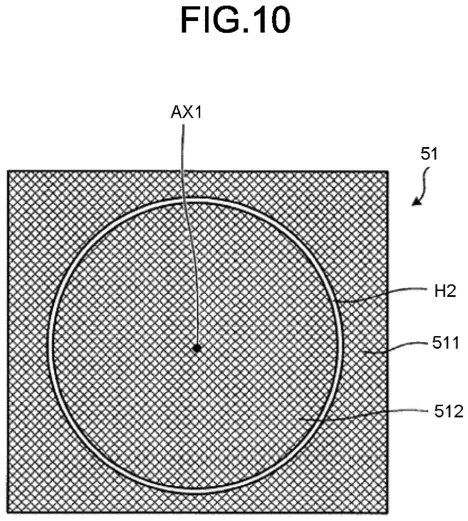

Fig. 10 is a top view illustrating the general structure of the placing table 51. As shown in Fig. 10, the placing table 51 has an edge part 511 and a rotation part 512. The edge part 511, which is formed in a shape (rectangle) corresponding to that of the box 11, is fixed at a position with a specific distance away from the bottom of the box 11. A circular hole portion H2 corresponding in shape to the rotation part 512 is arranged in the edge part 511. The rotation part 512, which corresponds in shape (circle) to the hole portion H2, is loosely fitted in the hole portion H2 of the edge part 511. The rotation part 512 can be rotationally supported by a support mechanism 52 around an axis AX1.

The support mechanism 52 is arranged in the space between the bottom of the box 11 and the placing table 51. The support mechanism 52 includes a power unit 521, a transmission unit 522 and a support shaft 523. The power unit 521 is a power source such as a step motor. The rotation shaft 524 of the power unit 521 is connected with the transmission unit 522 in a freely rotatable manner. The transmission unit 522 is a transmission component such as a ring gear. The transmission unit 522 converts the rotation power of the power unit 521 into the rotation around the axis AX1 and transfers the rotation to the support shaft 523. One end of the support shaft 523 is fixed in the center of the rotation part 512, and the other end of the rotation part 512 is supported by the transmission unit 522 in a freely rotatable manner.

In the structure of the present modification, the rotation power of the power unit 521 is transferred to the support shaft 523 through the action of the power unit 521 to rotate the placing table 51 around the axis AX1. In this way, the shopping basket C (commodity G) held on the placing table 51 can be rotated around the axis AX1. Further, the hardware structure, the functional structure and the processing sequence relating to the reading (writing) of an RFID tag T in the present modification are identical to those described in the foregoing embodiment and are therefore not described repeatedly.

With the reading apparatus 50 having the foregoing structure, the shopping basket C is accommodated in the reading chamber 13 so that all the commodities G (RFID tags T) in the shopping basket C can be read together. Further, as the electric wave environment relating to the communication of the RFID tag T with the RFID antenna 14 can be changed in the modification, commodities G can be read efficiently.

Further, although commodities G are moved indirectly through the movement of the placing table 15 or 51 in the foregoing embodiment and modifications, commodities G may also be moved directly. For example, in a case in which the commodity G is an item having a light weight such as a cloth, an injector for injecting air can be arranged in the reading chamber 13 as a power source. In this structure, the injector is driven by the drive unit 35 so that the commodity G in the shopping basket C is moved with air pressure.

### (Second Embodiment)

In the first embodiment, the electric wave environment relating to the communication of the RFID tag T with the RFID antenna 14 is changed by moving the shopping basket C (commodity G). In the second embodiment, the shopping basket C (commodity G) is fixed, and the electric wave environment is changed by moving another part. Moreover, the structural elements in the second embodiment which are identical to those in the first embodiment are denoted by the same reference numerals and not described repeatedly.

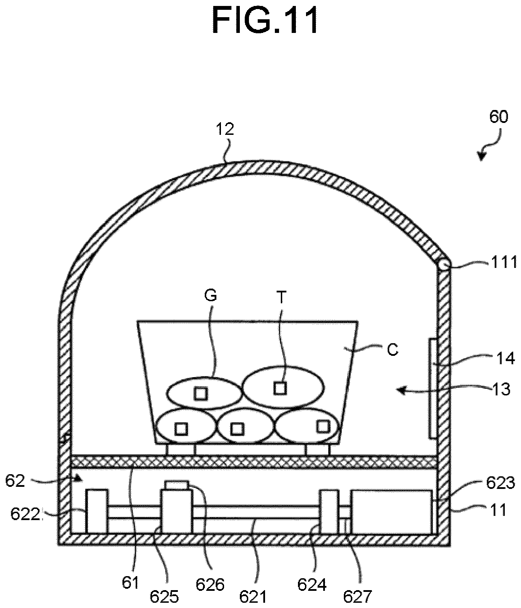

Fig. 11 is a schematic sectional view of a reading apparatus 60 according to the second embodiment. Fig. 11 shows a reading apparatus 60 in which the opening/closing cover 12 is closed.

In the present embodiment, like the foregoing reading apparatus 10, the reading apparatus 60 comprises a box 11 and an opening/closing cover 12. Further, a reading chamber (accommodation chamber) 13 capable of accommodating the shopping basket C is arranged inside the box 11. An RFID antenna 14 is arranged in the reading chamber 13. The RFID antenna 14 is arranged, for example, at the backside of the box 11 and the reading surface thereof is fixed facing the inside of the reading chamber 13. The shopping basket C is held on a plate-shaped placing table 61 in the reading chamber 13. The placing table 61 made of a tabular electric wave transmitting material is supported at the bottom of the box 11 with a space kept therebetween.

A moving mechanism 62 is arranged in the space between the bottom of the box 11 and the placing table 61. The moving mechanism 62 comprises a screw shaft 621, a bearing 622, a power unit 623, a coupler 624, a moving body 625 and a reflector unit 626.

One end of the screw shaft 621 is supported by the bearing 622 in a freely rotatable manner, and the other end of the screw shaft 621 is supported by the coupler 624 in a freely rotatable manner. The bearing 622 functions as the bearing of the screw shaft 621. The power unit 623 is a power source such as a step motor. The rotation shaft 627 of the power unit 623 is connected with the other end of the screw shaft 621 in the coupler 624. The coupler 624 transfers the rotation power of the power unit 623 to the screw shaft 621.

The moving body 625 is structured like this: a through hole is arranged on the main body of the moving body 625, and the ball screw nut of the screw shaft 621 is embedded in the through hole. By screwing the ball screw nut into the screw shaft 621, the moving body 625 is moved along the screw shaft 621 through the rotation of the screw shaft 621. The reflector unit 626 made of a tabular electric wave reflecting material is arranged on the moving body 625 so as to be moved along with the moving body 625. Besides, the hardware structure, the functional structure and the processing sequence relating to the reading (writing) of an RFID tag T in the embodiment are identical to those described in the first embodiment and are therefore not described repeatedly.

In the structure of the embodiment, the screw shaft 621 is rotated through the action of the power unit 623. Then, the rotary motion of the screw shaft 621 is changed into a linear motion by the ball screw, thereby moving the reflector unit 626. The reflection of the electric wave of the RFID antenna 14 in the reading chamber 13 is changed, in other words, the electric wave environment relating to the communication of the RFID tag T with the RFID antenna 14 is changed, through the movement of the reflector unit 626. In this way, the RFID antenna 14 is capable of more accurately reading the RFID tag T attached to a commodity G in the shopping basket C.

According to the reading apparatus 60 having the foregoing structure, the shopping basket C is accommodated in the reading chamber 13 so that all the commodities G (RFID tags T) in the shopping basket C can be read together. Further, as commodities are read while the electric wave environment relating to the communication of the RFID tag T with the RFID antenna 14 is changed, the failure of reading of an RFID tag T is prevented. Thus, commodities G can be read efficiently.

Besides, in the embodiment, one moving mechanism 62 (reflector unit 626) is arranged below the placing table 61, however, no limitations are given to the configuration position or the number of the moving mechanisms 62. For example, the moving mechanism 62 (reflector unit 626) may be arranged on either or both of the left side and the right side of the box 11. Further, the placing table 61 is preferably made of an electric wave reflecting material if no moving mechanism 62 is arranged below the placing table 61.

Further, although the plate-shaped reflector unit 626 is moved in the direction of a shaft in the embodiment, the shape and the actions of the reflector unit 626 are not limited to those. Another exemplary structure is described below as a modification of the second embodiment.

### [Modification]

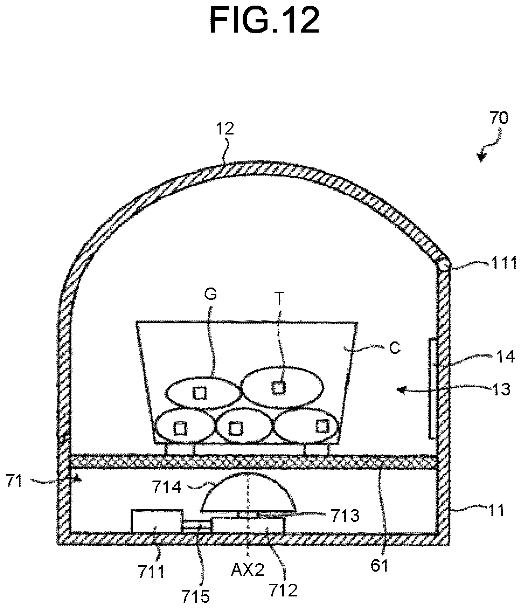

Fig. 12 is a schematic sectional view of a reading apparatus 70 according to the modification of the second embodiment. Fig. 12 shows a reading apparatus 70 in which the opening/closing cover 12 is closed. Moreover, the structural elements shown in Fig. 12 which are similar to those in the foregoing embodiments are denoted by the same reference numerals and not described repeatedly.

Like the foregoing reading apparatus 10, the reading apparatus 70 comprises a box 11 and an opening/closing cover 12. A reading chamber 13 capable of accommodating a shopping basket C is arranged inside the box 11. An RFID antenna 14 is arranged in the reading chamber 13. The RFID antenna 14 is arranged, for example, at the backside of the box 11 and the reading surface thereof is fixed facing the inside of the reading chamber 13. The shopping basket C is held on a placing table 61 in the reading chamber 13. The placing table 61 made of a tabular electric wave transmitting material is supported at the bottom of the box 11 with a certain space formed therebetween.

A rotating mechanism 71 is arranged in the space between the bottom of the box 11 and the placing table 61. The rotating mechanism 71 includes a power unit 711, a transmission unit 712, a support shaft 713 and a reflector unit 714. The power unit 711 is a power source such as a stepping motor. The rotation shaft 715 of the power unit 711 is connected with the transmission unit 712 in a freely rotatable manner. The transmission unit 712 is a transmission component such as a ring gear. The transmission unit 712 converts the rotation power of the power unit 711 into the rotation around an axis AX2 and transfers the rotation to the support shaft 713. One of the ends of the support shaft 713 is fixed in the substantially center of the reflector unit 714, and the other end of the support shaft 713 is supported by the transmission unit 712 in a freely rotatable manner. The reflector unit 714 is formed in the shape of a hemisphere, and a plurality of electric wave reflecting components are arranged on the surface (curved surface) of the reflector unit 714 like a mirror ball.

In the structure of the present modification, the rotation power around the axis AX2 is transferred to the support shaft 713 through the action of the power unit 711 to rotate the reflector unit 714 around the axis AX2. Further, the hardware structure, the functional structure and the processing sequence relating to the reading (writing) of an RFID tag T in the modification are identical to those described in the foregoing embodiment and are therefore not described repeatedly.

According to the reading apparatus 70 having the foregoing structure, the shopping basket C is accommodated in the reading chamber 13 so that all the commodities G (RFID tags T) in the shopping basket C can be read together. Further, as electric wave environment relating to the communication of the RFID tag T with the RFID antenna 14 is changed, commodities are read efficiently.

Moreover, in the modification, the reflector unit 714 is arranged below the placing table 61, however, the deployment of the reflector unit 714 is not limited to this, the reflector unit 714 may also be arranged on the upper portion (the opening/closing cover 12) of the box 11 or at another position.

Although the first and second embodiments and modifications thereof are described above, these embodiments are illustrated as examples but not as limitations to the scope of the present invention. Novel embodiments may be embodied in a variety of other forms; furthermore, various omissions, substitutions, variations or combinations may be devised without departing from the spirit of the invention. The accompanying claims and their equivalents are intended to cover such forms or modifications as would fall within the scope and spirit of the invention.

For example, it is described in the foregoing embodiments that the reading of RFID tags T is started according to an operation instruction from a customer, however, it is not limited to this. As another embodiment, a reading operation may be started automatically in response to the closing action of the opening/closing cover 12, without requiring the instruction by a customer.

Further, in the embodiments, a reading operation is ended and reset operation is carried out if the opening/closing cover 12 is opened within the period from the start of the reading of RFID tags T to the writing of a registration completion flag; however, it is not limited to this. As another embodiment, a locking mechanism for keeping the closed state of the opening/closing cover 12 is arranged on the contacting part of the box 11 of the reading apparatus 10 and the opening/closing cover 12 to carry out a control of the locking mechanism to prevent the opening/closing cover 12 from being opened. Specifically, the reader/writer control unit 302 controls the locking mechanism to keep the opening/closing cover 12 closed within a period from the start of the reading of RFID tags T to the writing of a registration completion flag, thereby preventing the opening/closing cover 12 from being opened. In this way, the insertion of a commodity the RFID tag of which is not read into the shopping basket C (reading chamber 13) can be prevented before the settlement processing is ended.

Further, it is described in the foregoing embodiments that the reading of RFID tags T is ended in response to an end instruction received from a customer, however,it is not limited to this. As another embodiment, the reading of RFID tags is ended automatically if the number of RFID tags (commodities) read reaches a customer-specified number of tags.

In the foregoing embodiments, the programs executed by each apparatus are preinstalled in the storage medium (ROM or memory unit) of the apparatus, however, the present invention is not limited to this, the programs may be recorded in a computer-readable recording medium such as a CD-ROM, a floppy disc, a CD-R and a Digital Versatile Disk (DVD) as installable or executable files. Further, the recording medium may be a storage medium for storing or temporarily storing the programs downloaded from an LAN or the Internet, but not limited to a medium independent from a computer or an assembly system.

Further, the programs executed by each apparatus of the foregoing embodiments are stored in a computer connected with a network such as the Internet and downloaded into the apparatus, or are provided or issued by a network such as the Internet.

## Claims

1. A self-checkout point of sales apparatus comprising a reading apparatus (10) for reading information from an RFID tag attached to a commodity, the reading apparatus comprising:
a box (11) provided with an opening acting as a commodity inlet/outlet and an accommodation chamber (13) for accommodating commodities;
an opening/closing cover (12) configured to open/close the opening of the box;
an antenna (14) arranged in the accommodation chamber;
a reading unit configured to carry out a reading processing in which information relating to a commodity is read from each RFID tag attached to each commodity accommodated in the accommodation chamber through the antenna; and
an output unit configured to output the information read by the reading unit
**characterized in that** the reading apparatus further comprises:
a change unit configured to change an electric wave environment relating to the communication of the RFID tag with the antenna within a period in which the reading processing is executed, and that
the change unit is configured to change the electric wave environment by moving the commodity directly or indirectly relatively to the antenna.

2. The self-checkout point of sales apparatus according to claim 1, the reading apparatus further including a placing table for holding the commodity arranged in the accommodation chamber, wherein
the change unit is configured to change the electric wave environment by moving the placing table.

3. The self-checkout point of sales apparatus according to claim 1 or 2, the reading apparatus further comprising:
an acquisition unit configured to acquire the opened/closed state information indicating the opened/closed state of the opening/closing cover, wherein
the reading unit carries out the reading processing within a period in which the opening/closing cover is closed based on the opened/closed state information.

4. A method for self-checking out comprising reading information from an RFID tag attached to a commodity accommodated in an accommodation chamber through an antenna, including:
executing a reading processing in which information relating to a commodity is read from each RFID tag attached to each commodity in the accommodation chamber;
changing an electric wave environment relating to the communication of the RFID tag with the antenna within a period in which the reading processing is executed; and
outputting the information read from the RFID tag,
wherein the electric wave environment is changed by moving the commodity directly or indirectly at changing step relatively to the antenna.

5. The method according to claim4, wherein the electric wave environment is changed by moving a placing table for holding the commodity arranged in the accommodation chamber.

6. The method according to claim 4 or 5, further comprising acquiring the opened/closed state information indicating the opened/closed state of the opening/closing cover, and carrying out the reading processing within a period in which the opening/closing cover is closed based on the opened/closed state information.

## Patentansprüche

1. Selbstbezahlvorrichtung für eine Verkaufsstelle, die eine Lesevorrichtung (10) zum Lesen von Informationen von einem RFID-Etikett oder -Schild, das an einem Artikel angebracht ist, umfasst, wobei die Lesevorrichtung umfasst:
einen Kasten (11), der mit einer Öffnung, die als Artikeleinlass/auslass wirkt, und einer Aufnahmekammer (13) zum Aufnehmen von Artikeln versehen ist,
eine Öffnungs/Schließabdeckung (12), die zum Öffnen/Schließen der Öffnung des Kastens ausgebildet ist,
eine Antenne (14), die in der Aufnahmekammer angeordnet ist,
eine Leseeinheit, die zum Durchführen einer Leseverarbeitung ausgebildet ist, bei der Informationen in Bezug auf einen Artikel von jedem RFID-Etikett oder -Schild, das an jedem Artikel angebracht ist, der in der Aufnahmekammer aufgenommen ist, mittels der Antenne gelesen werden, und
eine Ausgabeeinheit, die zum Ausgeben der Informationen ausgebildet ist, die durch die Leseeinheit gelesen worden sind,
**dadurch gekennzeichnet, dass** die Lesevorrichtung ferner umfasst:
eine Veränderungseinheit, die zum Verändern der Umgebung einer elektrischen Welle in Bezug auf die Kommunikation des RFID-Etiketts oder -Schilds mit der Antenne innerhalb eines Zeitraums, in dem die Leseverarbeitung durchgeführt wird, ausgebildet ist, und dadurch, dass
die Veränderungseinheit so ausgebildet ist, dass sie die Umgebung einer elektrischen Welle durch Bewegen des Artikels direkt oder indirekt relativ zu der Antenne verändert.

2. Selbstbezahlvorrichtung für eine Verkaufsstelle nach Anspruch 1, bei der die Lesevorrichtung ferner einen Anordnungstisch zum Halten des Artikels umfasst, der in der Aufnahmekammer angeordnet ist, wobei
die Veränderungseinheit zum Verändern der Umgebung einer elektrischen Welle durch Bewegen des Anordnungstischs ausgebildet ist.

3. Selbstbezahlvorrichtung für eine Verkaufsstelle nach Anspruch 1 oder 2, bei der die Lesevorrichtung ferner umfasst:
eine Erfassungseinheit, die zum Erfassen der Öffnungs/Schließzustandsinformationen ausgebildet ist, die den Öffnungs/Schließzustand der Öffnungs/Schließabdeckung angeben, wobei
die Leseeinheit die Leseverarbeitung innerhalb eines Zeitraums, in dem die Öffnungs/Schließabdeckung geschlossen ist, auf der Basis der Öffnungs/Schließ-zustandsinformationen durchführt.

4. Verfahren zum Selbstbezahlen, umfassend das Lesen von Informationen von einem RFID-Etikett oder -Schild, das an einem Artikel angebracht ist, der in einer Aufnahmekammer aufgenommen ist, durch eine Antenne, umfassend:
Durchführen einer Leseverarbeitung, in der Informationen, die einen Artikel betreffen, von jedem RFID-Etikett oder -Schild, das an jedem Artikel in der Aufnahmekammer angebracht ist, gelesen werden,
Verändern der Umgebung einer elektrischen Welle in Bezug auf die Kommunikation des RFID-Etiketts oder -Schilds mit der Antenne innerhalb eines Zeitraums, in dem die Leseverarbeitung durchgeführt wird, und
Ausgeben der Informationen, die von dem RFID-Etikett oder -Schild gelesen worden sind,
wobei die Umgebung einer elektrischen Welle durch Bewegen des Artikels direkt oder indirekt in einem Veränderungsschritt relativ zu der Antenne verändert wird.

5. Verfahren nach Anspruch 4, bei dem die Umgebung einer elektrischen Welle durch Bewegen eines Anordnungstischs zum Halten des Artikels, der in der Aufnahmekammer angeordnet ist, verändert wird.

6. Verfahren nach Anspruch 4 oder 5, das ferner das Erfassen der Öffnungs/Schließzustandsinformationen, die den Öffnungs/Schließzustand der Öffnungs/Schließabdeckung angeben, und das Durchführen der Leseverarbeitung innerhalb eines Zeitraums, in dem die Öffnungs/Schließabdeckung geschlossen ist, auf der Basis der Öffnungs/Schließzustandsinformationen umfasst.

## Revendications

1. Dispositif formant point de vente par auto-contrôle comprenant un dispositif de lecture (10) destiné à lire des informations à partir d'une étiquette RFID fixée sur un produit, le dispositif de lecture comprenant :
une boîte (11) comportant une ouverture servant d'entrée/sortie de produit et un compartiment de réception (13) destiné à recevoir des produits ;
un couvercle d'ouverture/fermeture (12) configuré de manière à ouvrir/fermer l'ouverture de la boîte ;
une antenne (14) agencée dans le compartiment de réception ;
une unité de lecture configurée de manière à mettre en oeuvre un traitement de lecture dans lequel des informations se rapportant à un produit sont lues à partir de chaque étiquette RFID fixée sur chaque produit reçu dans le compartiment de réception au moyen de l'antenne ; et
une unité de sortie configurée de manière à délivrer les informations lues par l'unité de lecture,
**caractérisé en ce que** le dispositif de lecture comprend, en outre :
une unité de modification configurée de manière à modifier un environnement d'onde électrique en fonction de la communication de l'étiquette RFID avec l'antenne au cours d'une période pendant laquelle le traitement de lecture est exécuté, et **en ce que**
l'unité de modification est configurée de manière à modifier l'environnement d'onde électrique en déplaçant le produit directement ou indirectement par rapport à l'antenne.

2. Dispositif formant point de vente par auto-contrôle selon la revendication 1, le dispositif de lecture comportant, en outre, une table de positionnement destinée à maintenir le produit agencé dans le compartiment de réception, dans lequel
l'unité de modification est configurée de manière à modifier l'environnement d'onde électrique en déplaçant la table de positionnement.

3. Dispositif formant point de vente par auto-contrôle selon la revendication 1 ou 2, le dispositif de lecture comprenant, en outre :
une unité d'acquisition configurée de manière à acquérir les informations d'état ouvert/fermé indiquant l'état ouvert/fermé du couvercle d'ouverture/fermeture, dans lequel
l'unité de lecture met en oeuvre le traitement de lecture au cours d'une période pendant laquelle le couvercle d'ouverture/fermeture est fermé sur la base des informations d'état ouvert/fermé.

4. Procédé d'auto-contrôle comprenant la lecture d'informations à partir d'une étiquette RFID fixée sur un produit reçu dans un compartiment de réception au moyen d'une antenne, comportant :
l'exécution d'un traitement de lecture dans lequel les informations se rapportant à un produit sont lues à partir de chaque étiquette RFID fixée sur chaque produit dans le compartiment de réception ;
la modification d'un environnement d'onde électrique en fonction de la communication de l'étiquette RFID avec l'antenne au cours d'une période pendant laquelle le traitement de lecture est exécuté ; et
la sortie des informations lues à partie de l'étiquette RAID,
dans lequel l'environnement d'onde électrique est modifié en déplaçant directement ou indirectement le produit par rapport à l'antenne à l'étape de modification.

5. Procédé selon la revendication 4, dans lequel l'environnement d'onde électrique est modifié en déplaçant une table de positionnement destinée à maintenir le produit agencé dans le compartiment de réception.

6. Procédé selon la revendication 4 ou 5, comprenant, en outre, l'acquisition des informations d'état ouvert/fermé indiquant l'état ouvert/fermé du couvercle d'ouverture/fermeture, et la mise en oeuvre du traitement de lecture au cours d'une période pendant laquelle le couvercle d'ouverture/fermeture est fermé sur la base des informations d'état ouvert/fermé.
